# EUROPÄISCHE PATENTSCHRIFT

(11) **EP 0 364 684 B1**
(45) Veröffentlichungstag und Bekanntmachung des Hinweises auf die Patenterteilung: **14.04.1993**
(21) Anmeldenummer: 89114693.8
(22) Anmeldetag: 09.08.1989
(51) Int. Cl.: A47J 27/212, A47J 27/62, G01D 13/26, G01D 5/39

(54) **Vorrichtung zur Anzeige eines Betriebszustandes eines Gargefässes**
Apparatus for indicating the operating condition of a cooking vessel
Appareil d'indication des conditions à l'intérieur d'un enceinte de cuisson

(30) Priorität: 18.10.1988 DE 3835386
(43) Veröffentlichungstag der Anmeldung: 25.04.1990
(73) Patentinhaber: AMC International Alfa Metalcraft Corporation AG, 6343 Rotkreuz (CH)
(72) Erfinder: Schultz, Horst, Dipl.-Ing. c/o KEIL & SCHAAFHAUSEN, D-6000 Frankfurt am Main 1 (DE)
(74) Vertreter: Keil, Rainer A., Dipl.-Phys. Dr.

(56) Entgegenhaltungen:
- EP-A- 0 124 483
- DE-A- 2 454 203
- FR-A- 2 535 190

## Beschreibung

Die Erfindung bezieht sich auf ein Gargefäß mit einer Vorrichtung zur Anzeige eines bestimmten oder bestimmbaren Betriebszustandes, wie der im Gefäßinneren herrschenden Temperatur oder des im Gefäßinneren herrschenden Druckes, durch ein über die Ferne wahrnehmbares, insbesondere optisches und/oder akustisches Signal, mit einem eine Meßwertskala und einem den jeweiligen Meßwert durch Relativbewegung zur Meßwertskala anzeigenden Zeigerelement ausgestatteten, z.B. im Deckelknopf des Gargefäßes untergebrachten Anzeigegerät, wie einem Thermometer oder Manometer.

Ein derartiges Kochgefäß mit einer Vorrichtung zur elektrischen Übertragung und Anzeige von Kochtemperaturen ist aus der DE-A-2 909 129 bekannt. Dabei trägt der Deckelknopf an seiner Oberfläche mindestens zwei gegeneinander isolierte Kontaktringe. Mittels einer auf diese aufsteckbaren Kontakteinrichtung mit Stromversorgung und Anzeigeeinheit wird in Abhängigkeit von der Deckeltemperatur über einen im Deckelknopf angeordneten Schalter ein Stromkreis zur Erzeugung eines Signals geschlossen. Der Schalter ist als Hall-Schalter ausgebildet und der Zeiger einer Bimetallspirale weist einen Magneten auf. Die bekannte Vorrichtung setzt eine gute Kontaktierung der Leiter voraus. Ferner ist eine konstruktive Änderung von bereits vorhandenen Thermometern, z.B. der Einbau des Magneten und der Kontaktringe, erforderlich, um einen bestimmten Betriebszustand, bspw. das Erreichen einer bestimmten Temperatur zum Umschalten auf eine niedrigere Temperaturstufe der Heizquelle für die restliche Garzeit, zu signalisieren.

Aus der DE-A-2 454 203 ist ein Anzeigegerät für ein Meßinstrument an sich bekannt, bei dem über eine Reflexionslichtschranke der Eintritt eines Zeigerelements in den Lichtweg über den sich ergebenden Unterschied in der Oberflächenrefexion festgestellt und daraufhin ein Meldesignal an eine akustische Signalabgabeeinrichtung weitergeleitet wird. Einsatzbereich eines derartigen Meßinstruments ist die Geschwindigkeitskontrolle bei Kraft- und Schienenfahrzeugen, bei der das Anzeigegerät mit dem Tachometer eines Fahrzeugs verbunden werden kann. Die Anwendung eines derartigen Anzeigegerätes bei einem gattungsgemäßen Gargefäß läßt sich dieser Druckschrift nicht entnehmen.

Aufgabe der vorliegenden Erfindung ist es, ein Gargefäß mit einer Vorrichtung der eingangs genannten Art so auszubilden, daß sie bei einfachem Aufbau zuverlässiger arbeitet, auch nachträglich ohne Umbauten vorhandener Anzeigegeräte, wie Thermometer oder Manometer, eingesetzt werden kann und bei bequemer Handhabung eine individuelle Einstellung der gewünschten Umschalttemperatur gewährleistet.

Diese Aufgabe wird erfindungsgemäß im wesentlichen gelöst durch eine Reflexionslichtschranke, welche in Richtung der Bewegungsebene des Zeigerelements, vorzugsweise auf die Meßwertskala mit dem sich relativ dazu, beispielsweise darüber bewegenden Zeigerelement ausgerichtet ist, welche den bei Eintritt des Zeigerelements in den Lichtweg sich ergebenden Unterschied in der Oberflächenreflexion feststellt, welche daraufhin ein Meldesignal an die optische und/oder akustische Signalabgabevorrichtung liefert und welche in einem gesonderten Gehäuse untergebracht, wobei das Gehäuse in verschiedenen Umfangsstellungen am Deckelknopf festlegbar ist. Ersichtlich kann eine solche Vorrichtung bei jedem beliebigen, an einem Gargefäß bereits vorhandenen Zeigerthermometer oder -manometer ohne Umbauten derselben angebracht werden. Daher ist eine nachträgliche Ausrüstung der vielen bereits im Verkehr befindlichen Gargefäße mit der erfindungsgemäßen Vorrichtung möglich. Sie ist einfach im Aufbau und zuverlässig in ihrer Funktion, da keine elektrischen Schalter betätigt und keine elektrischen Kontaktübergänge gewährleistet werden müssen. Dadurch, daß die Reflexionslichtschranke in einem gesonderten Gehäuse untergebracht und das Gehäuse in verschiedenen Umfangsstellungen am Deckelknopf festlegbar ist, wird einerseits eine störunanfällige Vorrichtung zur Anzeige geschaffen, die andererseits in einfacher Weise eine individuelle Einstellung der gewünschten Umschalttemperatur gewährleistet.

Die Reflexionslichtschranke weist vorzugsweise einen Lichtleiter auf, dessen Öffnung der Bewegungsebene des Zeigerelements zugewandt ist. Auf diese Weise wird mit einfachen Mitteln ein zuverlässiges Erfassen der Stellung des Zeigerelements erreicht.

Das nachträgliche Anbringen sowie das Einsetzen der erfindungsgemäßen Vorrichtung nur im Bedarfsfalle ist dann besonders einfach, wenn die Reflexionslichtschranke mit dem Lichtleiter, die Signalabgabeeinrichtung und die Stromversorgung hierfür in einem gesonderten Gehäuse untergebracht sind, welches dem Anzeigegerät lösbar zuordenbar ist.

Bei bekannten Gargefäßen ist, wie bspw. bei demjenigen nach der DE-OS 29 09 129, das Anzeigegerät in dem Deckelknopf untergebracht. In diesem Falle ist das Gehäuse in vorteilhafter Weise an oder auf den Deckelknopf an- bzw. aufsteckbar.

Dabei kann insbesondere das Gehäuse in unterschiedlichen Umfangsstellungen auf den Deckelknopf aufsteckbar und/oder am Umfang des Deckelknopfes um dessen Achse verdrehbar sein, so daß die erfindungsgemäße Vorrichtung auf den Betriebszustand, welcher signalisiert werden soll, einstellbar ist. So kann bspw. erreicht werden, daß das Signal bei einer höheren oder bei einer niedrigeren Umschalttemperatur abgegeben wird.

Wie ebenfalls aus der DE-OS 29 09 129 an sich bekannt, kann das Gehäuse mit einer Außenkontur in eine umlaufende Vertiefung des Deckelknopfes passen und so auf den Deckel aufgeklemmt werden. Bei der vorliegenden Erfindung ist vorgesehen, daß dann das Gehäuse mit einem die Öffnung des Lichtleiters aufweisenden Abschnitt die Meßwertskala mit dem sich relativ dazu bewegenden Zeigerelement überkragt. Dadurch kommt die Reflektionslichtschranke zwangsläufig beim Aufstecken des Gehäuses in die richtige Lage relativ zur Meßwertskala und dem zu erfassenden Zeigerelement.

Das Gehäuse kann aber auch als auf den Deckelknopf aufsteckbarer und gegenüber diesem koaxial verdrehbarer Ring ausgebildet sein, welcher mindestens mit einem die Öffnung des Lichtleiters aufweisenden Abschnitt die Meßwertskala mit dem sich relativ dazu bewegenden Zeigerelement überkragt. Auch diese Ausgestaltung läßt eine einfache Befestigung und Lösung des Gehäuses von dem Deckelknopf im Bedarfsfalle zu.

Das Gehäuse besteht zweckmäßigerweise aus Kunststoff, so daß die in ihm eingebetteten Einheiten, wie Reflektionslichtschranke, Lichtleiter, Signalabgabeeinrichtung und Stromversorgung, gegen die im Gargefäß herrschenden Betriebstemperaturen gut wärmeisoliert sind.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

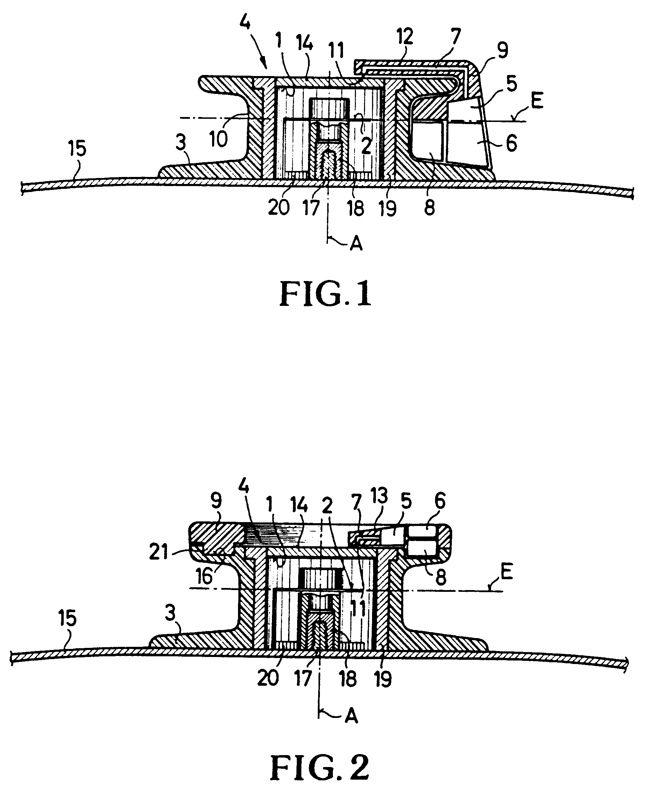

Es zeigen die Figuren 1 und 2 im Vertikalschnitt schematisch zwei Ausführungsformen einer die Erfindung aufweisenden Anzeigevorrichtung.

Wie aus Fig. 1 ersichtlich, ist der Deckel 15 eines Gargefäßes mit einem Deckelknopf 3 mittels einer am Deckel 15 angebrachten Schraube 17 und einer im Deckelknopf 3 festgelegten Mutter 18 verbunden. Ein metallener und an seiner Oberseite mit einer durchsichtigen Scheibe 14 ausgestatteter Einsatz 19 ist in einer im wesentlichen zylindrischen Aussparung des Deckelknopfes 2 untergebracht. Innerhalb des Einsatzes 19 befindet sich eine Anzeigeeinrichtung mit einer bspw. auf der Unterseite der Scheibe 14 angebrachten Meßwertskala 1 und einem Zeigerelement 2, welches zur Bewegung in einer Ebene E an einer Bimetallspirale 20 vorgesehen ist. Die Bimetallspirale 20 ist fest mit der Oberfläche des Deckels 15 verbunden und gibt demzufolge bei Temperatureinwirkung von der Unterseite des Deckels 15 eine Temperaturanzeigegröße in Form einer Bewegung des Zeigerelements 2 wieder, welche relativ zu der Meßwertskala 1 abgelesen werden kann. Somit bildet der Einsatz 19 mit seinen Einbauten ein in diesem Fall als Thermometer ausgebildetes Anzeigegerät 4.

Der Deckelknopf 3 hat eine umlaufende Nut 10. In diese ist ein beispielsweise aus Kunststoff bestehendes Gehäuse 9 eingepaßt und auf den Knopfschaft aufgeklemmt. Das Gehäuse 9 ist an beliebiger Stelle des Umfangs in die Vertiefung 10 einsetzbar und auch um die Achse A relativ zu dem Deckelknopf 3 verdrehbar, so daß es an beliebiger Stelle des Umfangs relativ zu der Meßwertskala 1 gebraucht und aus dieser auch wieder abgenommen werden kann.

In dem Gehäuse 9 ist eine Reflektionslichtschranke 5 untergebracht, deren Lichtleiter 7 in einen Abschnitt 12 des Gehäuses 9 führt, welcher die Scheibe 14 und damit die Meßwertskala 1 und die Ebene E, in welcher sich das Zeigerelement 2 bewegt, überkragt. Dabei führt der Lichtleiter 7 bis zu einer Öffnung 11 unmittelbar über die Meßwertskala 1. Der Reflektionslichtschranke 5 ist in dem Gehäuse 9 ferner eine Signalabgabeeinrichtung 6 und beiden eine Stromversorgung 8 zugeordnet.

Das Gehäuse 9 wird zunächst so auf den Deckelknopf 3 aufgesteckt und ggf. gedreht, daß die Öffnung 11 des Lichtleiters 7 gerade über dem Skalenabschnitt der gewünschten Umschalttemperatur steht, bei welcher ein sinnfälliges optisches oder akustisches Signal abgegeben werden soll, um den Benutzer auf das Erfordernis des Umschaltens der Heizquelle auf eine niedrigere Kochstufe aufmerksam zu machen, Das Zeigerelement 2 bewegt sich nun bei Beginn des Garprozesses für das in dem Gargefäß befindliche Gargut aus der Anfangstemperatur bis zu der so vorbestimmten Umschalttemperatur. Gelangt das Zeigerelement 2 mit seinem z.B. als Markierungsstrich ausgebildeten Anzeigeteil unter die Öffnung 11 des Lichtleiters 7 der Reflektionslichtschranke 5, so wird der sich ergebende Unterschied in der Oberflächenreflektion festgestellt und daraufhin von der Reflektionslichtschranke 5 ein Meldesignal an die Signalabgabeeinrichtung 6 abgegeben, worauf das gewünschte sinnfällige optische oder akustische Signal ausgelöst wird. Bei Nichtgebrauch oder zum Abwaschen des Deckels 15 kann das Gehäuse 9 einfach von dem Deckelknopf 3 abgezogen und gesondert bis zum Wiedergebrauch aufbewahrt werden.

Die in Fig. 2 dargestellte Ausführungsform unterscheidet sich von der gemäß Fig. 1 im wesentlichen nur dadurch, daß das Gehäuse 9 eine andere Gestalt hat, indem dieses als Ring ausgebildet ist und mit einer auf der Unterseite umlaufenden Rippe 21 in eine Ringnut 16 auf der Oberseite des Deckelknopfes 3 einsteckbar und/oder einrastbar ist. Das so als Ring ausgebildete Gehäuse 9 befindet sich somit koaxial zum Deckelknopf 3 und ist bezüglich dessen Achse A auf dem Deckelknopf 3 verdrehbar, so daß der die Öffnung 11 des Lichtleiters 7 aufweisende, die durchsichtige Scheibe 14 mit der Meßwertskala 1 überkragende Abschnitt 13 des Gehäuses 9 auf die gewünschte Umschalttemperatur einjustiert werden kann.

Bei beiden Ausführungsformen kann vorgesehen sein, daß für bestimmte häufig gewünschte Umschalttemperaturen das Gehäuse 9 an dem Deckelknopf 3 in der entsprechenden Drehlage einrastet, so daß das Gehäuse 9 einfach auf diese gewünschte Drehlage gebracht werden kann und sich nicht ungewollt daraus verschiebt.

### Bezugszeichenliste:

- 1: Meßwertskala
- 2: Zeigerelement
- 3: Deckelknopf
- 4: Anzeigegerät
- 5: Reflektionslichtschranke
- 6: Signalabgabeeinrichtung
- 7: Lichtleiter
- 8: Stromversorgung
- 9: Gehäuse
- 10: Vertiefung
- 11: Öffnung
- 12: Abschnitt
- 13: Abschnitt
- 14: Glasplatte
- 15: Deckel
- 16: Ringnut
- 17: Schranke
- 18: Mutter
- 19: Einsatz
- 20: Bimetallspirale
- 21: Rippe
- A: Achse
- E: Bewegungsebene

## Patentansprüche

1. Gargefäß mit einer Vorrichtung zur Anzeige eines bestimmten oder bestimmbaren Betriebszustandes, wie der im Gefäßinneren herrschenden Temperatur oder des im Gefäßinneren herrschenden Druckes, durch ein über die Ferne wahrnehmbares, insbesondere optisches und/oder akustisches Signal, mit einem mit einer Meßwertskala (1) und einem den jeweiligen Meßwert durch Relativbewegung zur Meßwertskala (1) anzeigenden Zeigerelement (2) ausgestatteten, z.B. im Deckelknopf (3) des Gargefäßes untergebrachten Anzeigegerät (4), wie einem Thermometer oder Manometer, gekennzeichnet durch eine Reflexionslichtschranke (5), welche in Richtung der Bewegungsebene (E) des Zeigerelements (2), vorzugsweise auf die Meßwertskala (1) mit dem sich relativ dazu, beispielsweise darüber bewegenden Zeigerelement (2) ausgerichtet ist, welche den bei Eintritt des Zeigerelements (1) in den Lichtweg sich ergebenden Unterschied in der Oberflächenreflexion feststellt, welche daraufhin ein Meldesignal an die optische und/oder akustische Signalabgabeeinrichtung (6) liefert und welche in einem gesonderten Gehäuse (9) untergebracht ist, wobei das Gehäuse (9) in verschiedenen Umfangsstellungen am Deckelknopf (3) festlegbar ist.

2. Gargefäß nach Anspruch 1, dadurch gekennzeichnet, daß die Reflexionslichtschranke (5) einen Lichtleiter (7) aufweist, dessen Öffnung (11) der Bewegungsebene (E) des Zeigerelements (2) zugewandt ist.

3. Gargefäß nach Anspruch 2, dadurch gekennzeichnet, daß die Reflexionslichtschranke (5) mit dem Lichtleiter (7), die Signalabgabeeinrichtung (6) und die Stromversorgung (8) hierfür in einem gesonderten Gehäuse (9) untergebracht ist, welches dem Anzeigegerät (4) lösbar zuordenbar ist.

4. Gargefäß nach Anspruch 3, wobei das Anzeigegerät (4) in dem Deckelknopf (3) untergebracht ist, dadurch gekennzeichnet, daß das Gehäuse (9) an oder auf den Deckelknopf (3)an- bzw. aufsteckbar ist.

5. Gargefäß nach Anspruch 3 oder 4, dadurch gekennzeichnet, daß das Gehäuse (9) in verschiedenen Umfangsstellungen auf den Deckelknopf (3) aufsteckbar und/oder am Umfang des Deckelknopfes (3) um dessen Achse (A) verdrehbar ist.

6. Gargefäß nach einem der Ansprüche 3 bis 5, wobei das Gehäuse (9) mit seiner Außenkontur in eine umlaufende Vertiefung (10) des Deckelknopfes (3) paßt, dadurch gekennzeichnet, daß das Gehäuse (9) mit einem die Öffnung des Lichtleiters (7) aufweisenden Abschnitt (12) die Meßwertskala (1) mit dem sich relativ dazu bewegenden Zeigerelement (2) überkragt.

7. Gargefäß nach einem der Ansprüche 3 bis 5, dadurch gekennzeichnet, daß das Gehäuse (9) als auf den Deckelknopf (3) aufsteckbarer und gegenüber diesem koaxial verdrehbarer Ring ausgebildet ist, welcher mindestens mit einem die Öffnung (11) des Lichtleiters (7) aufweisenden Abschnitt (13) die Meßwertskala (1) mit dem sich relativ dazu bewegenden Zeigerelement (2) überkragt.

8. Gargefäß nach einem der Ansprüche 3 bis 7, dadurch gekennzeichnet, daß das Gehäuse (9) aus Kunststoff besteht.

## Claims

1. Cooking vessel with equipment for the display of a determined or determinable operating state, such as the temperature prevailing in the interior of the vessel or the pressure prevailing in the interior of the vessel, by means of a signal which can be perceived across distance and which is in particular optical and/or acoustic, with a display device (4), for example accommodated in the cover knob (3) of the cooking vessel, equipped with a measured-value scale (1) and an indicator element (2) indicating the respective measured value through movement relative to the measured-value scale (1), such as a thermometer or manometer, characterized by a reflecting light barrier (5) which is aligned in the direction of the movement plane (E) of the indicator element (2), preferably on to the measured-value scale (1) having the indicator element (2) moving relative thereto, for example thereover, which detects the difference in the surface reflection given upon entry of the indicator element (1) into the light path, which thereupon supplies an indicator signal to the optical and/or acoustic signal-emitting device (6) and which is accommodated in a separate housing (9), whereby the housing (9) can be fixed in different circumferential positions on the cover knob (3).

2. Cooking vessel according to claim 1, characterized in that the reflecting light barrier (5) has a light conductor (7), the opening (11) of which faces the movement plane (E) of the indicator element (2).

3. Cooking vessel according to claim 2, characterized in that the reflecting light barrier (5) with the light conductor (7), the signal-emitting device (6) and the current supply (8) for this are accommodated in a separate housing (9), which can be releasably associated with the display device (4).

4. Cooking vessel according to claim 3, whereby the display device (4) is accommodated in the cover knob (3), characterized in that the housing (9) can be attached to or mounted on the cover knob (3).

5. Cooking vessel according to claim 3 or 4, characterized in that the housing (9) can be mounted in different circumferential positions on the cover knob (3) and/or rotated at the circumference of the cover knob (3) about its axis (A).

6. Cooking vessel according to one of claims 3 to 5, whereby the housing (9) with its outer contour fits into a circulating depression (10) of the cover knob (3), characterized in that the housing (9) with a section (12) having the opening of the light conductor (7) hangs over the measured-value scale (1) having the indicator element (2) moving relative thereto.

7. Cooking vessel according to one of claims 3 to 5, characterized in that the housing (9) is constructed as a ring which can be mounted on to the cover knob (3) and can be coaxially rotated relative thereto, which at least with a section (13) having the opening (11) of the light conductor (7) hangs over the measured-value scale (1) having the indicator element (2) moving relative thereto.

8. Cooking vessel according to one of claims 3 to 7, characterized in that the housing (9) is made of plastic.

## Revendications

1. Récipient de cuisson comportant un dispositif d'indication d'un état de fonctionnement déterminé ou déterminable, tel que la température ou la pression régnant à l'intérieur dudit récipient, au moyen d'un signal perceptible à distance, en particulier d'un signal optique et/ou acoustique, comprenant un appareil indicateur (4), tel qu'un thermomètre ou un manomètre, qui par exemple est logé dans la poignée (3) du couvercle du récipient et est pourvu d'une échelle de mesure (1) et d'un index (2) indiquant la valeur mesurée par déplacement par rapport à l'échelle de mesure (1), caractérisé par un barrage photo-électrique (5) travaillant par réflexion qui est orienté en direction du plan de déplacement (E) de l'index (2), de préférence en direction de l'échelle de mesure (1) et de l'index (2) qui se déplace par rapport à celle-ci, par exemple au-dessus de celle-ci, lequel barrage photo-électrique, lorsque l'index (2) coupe le trajet du rayon lumineux détecte la différence de réflexion de la surface et délivre un signal au dispositif de déclenchement de signal (6) optique et/ou acoustique et est logé dans un boîtier (9) séparé, le boîtier (9) pouvant être fixé en différentes positions sur la périphérie de la poignée (3) du couvercle.

2. Récipient de cuisson selon la revendication 1, caractérisé par le fait que le barrage photo-électrique (5) travaillant par réflexion présente un guide de lumière (7) dont l'ouverture (11) est tournée vers le plan de déplacement (E) de l'index (2).

3. Récipient de cuisson selon la revendication 2, caractérisé par le fait que le barrage photo-électrique (5) ainsi que le guide de lumière (7), le dispositif de déclenchement de signal (6) et l'alimentation en courant électrique (8) de ces éléments sont logés dans un boîtier séparé (9) qui peut être associé avec possibilité de séparation à l'appareil indicateur (4).

4. Récipient de cuisson selon la revendication 3, l'appareil indicateur (4) étant logé dans la poignée (3) du couvercle, caractérisé par le fait que le boîtier (9) peut être monté par encliquetage sur la poignée (3) de couvercle, sur le côté ou sur le dessus de celle-ci.

5. Récipient de cuisson selon la revendication 3 ou 4, caractérisé par le fait que le boîtier (9) peut être enfilé dans différentes positions périphériques sur la poignée (3) du couvercle et/ou peut tourner sur la périphérie de la poignée (3) du couvercle, autour de l'axe de celle-ci.

6. Récipient de cuisson selon l'une des revendications 3 à 5, le boîtier (9) s'adaptant par sa forme extérieure dans une dépression (10) circulaire de la poignée (3) du couvercle, caractérisé par le fait que le boîtier (9), par une partie (12) dans laquelle se trouve l'ouverture du guide de lumière (7), surplombe l'échelle de mesure (1) et l'index (2) qui se déplace par rapport à celle-ci.

7. Récipient de cuisson selon l'une des revendications 3 à 5, caractérisé par le fait que le boîtier (9) est agencé sous la forme d'une bague qui s'enfile sur la poignée (3) du couvercle et peut tourner coaxialement à celle-ci et qui, par une partie (13) dans laquelle se trouve l'ouverture du guide de lumière (7), surplombe l'échelle de mesure (1) et l'index (2) qui se déplace par rapport à celle-ci.

8. Récipient de cuisson selon l'une des revendications 3 à 7, caractérisé par le fait que le boîtier (9) est en matière plastique.
